# EUROPÄISCHE PATENTSCHRIFT

(11) **EP 2 034 278 B1**
(45) Veröffentlichungstag und Bekanntmachung des Hinweises auf die Patenterteilung: **25.05.2016**
(21) Anmeldenummer: 08013142.8
(22) Anmeldetag: 22.07.2008
(51) Int. Cl.: G01F 1/00, G01F 1/708, G01P 5/18

(54) **Verfahren und Vorrichtung zur Bestimmung der Durchflussmenge fliessender Gewässer**
Method and device for determining the flow rate of flowing water
Procédé et dispositif de détermination de la quantité de débit d'eaux s'écoulant

(30) Priorität: 04.09.2007 DE 102007041717
(43) Veröffentlichungstag der Anmeldung: 11.03.2009
(73) Patentinhaber: Kölling, Christian, 82538 Geretsried-Gelting (DE)
(72) Erfinder: Kölling, Christian, 82538 Geretsried-Gelting (DE)
(74) Vertreter: Kloiber, Thomas

(56) Entgegenhaltungen:
- WO-A1-01/51897
- DE-A1- 4 313 682
- JP-A- 6 074 797
- JP-A- 63 229 373
- JP-A- 2004 117 119

## Beschreibung

Die Erfindung betrifft ein Verfahren und eine Vorrichtung zur Bestimmung der Oberflächengeschwindigkeiten und der Durchflussmenge von Flüssigkeiten in Rohrleitungen, offenen oder geschlossenen Kanälen und Gewässern.

Das erfindungsgemäße Verfahren und die Vorrichtung ermitteln Oberflächengeschwindigkeiten und Durchflussmengen von Flüssigkeiten jeder Art in jeder Art von Leitungen. Hierbei versteht die Erfindung unter Leitungen Bäche, Flüsse, Kanäle, Rohrleitungen, Gerinne und sonstige geometrische Strukturen, in denen Flüssigkeiten bewegt werden. Unter Flüssigkeiten versteht die Erfindung sämtliche in Leitungen transportierte Flüssigkeiten, insbesondere Süß-, Salz-, Brack-, Regen-, Misch-, Ab-, Kühl- oder Prozesswasser, Lebensmittel oder Lebensmittelrohstoffe wie Milch, Öl, Säfte, Chemikalien wie Erdöl, Kerosin oder Benzin.

Ein Verfahren zum Messen des Durchflusses in Rohrleitungen und offenen Gerinnen ist aus der DE 43 20 295 A1 bekannt. Dort ist ein Verfahren beschrieben, das Ultraschallsensoren nutzt, um die Gewässergeschwindigkeit im Impuls-Doppler-Verfahren in Rückstreuung zu bestimmen. Alternativ werden Laser-Doppler-Anemometer in Rückstreuung verwendet. Solche Verfahren, bei denen Sensoren unter der Flüssigkeitsoberfläche angeordnet sind, sind durch in der Flüssigkeit treibende Gegenstände hochgradig beschädigungsanfällig. Radarmessungen von Oberflächengeschwindigkeiten sind nur bei ausreichend großen Geschwindigkeiten verwendbar und können durch Oberflächenwellen verfälscht werden, die beispielsweise durch Wind verursacht sind.

Die JP 6-74797 A beschreibt eine von den Umgebungsbedingungen unabhängige Vorrichtung zum Messen des Volumenstromes eines Fließgewässers. Das zu Grunde liegende Prinzip ist die Bestimmung der strömungsgeschwindigkeitsabhängigen Abtriebsstrecke von artifiziell am Grund des Fließgewässers erzeugten Gasblasen mit definierter Steiggeschwindigkeit, wobei die Auftauchposition der Gasblasen beim Erreichen der Wasseroberfläche von einer zum Messen von Winkeln geeigneten Kamera erfasst wird. Eine Kalibration der Vorrichtung unter Berücksichtigung von tatsächlichen Volumenströmen zur Steigerung der Messgenauigkeit ist bei diesem Verfahren mit Nachteil nicht vorgesehen.

Die DE 43 13 682 A1 offenbart ein Verfahren zur visuellen Bestimmung und Messung des Abflusses von langsam und mit freiem Spiegel fließenden Flüssigkeiten unter Verwendung von artifiziell erzeugten Luftblasen als Messmedium und eine Anordnung zur Durchführung dieses Verfahrens. Bei dem auf dem Prinzip der integrierenden Schwimmermessung basierenden Verfahren wird die horizontale Abdrift der Luftblasen bei Erreichen der Flüssigkeitsoberfläche mit einem einzigen Bild einer Kamera erfasst. Diese Verfahren liefern lediglich dann hinreichend genaue Werte für den Abfluss, wenn die Steiggeschwindigkeit der Luftblasen konstant und die Strömung laminar ist.

Aus der WO 01/51897 A1 ist ein Verfahren und eine Vorrichtung zum Messen des Volumenstromes eines nicht-gasförmigen fließenden Mediums durch einen Kanal bekannt. Hierzu wird die Fließgeschwindigkeit des Mediums an dessen Oberfläche durch eine zeitlich gestaffelt durchgeführte Bilderkennung von Oberflächeneigenschaften oder -formen des Mediums und der zugehörige Pegelstand des Mediums in dem Kanal mittels einer Kamera bestimmt. Als Oberflächeneigenschaften oder - formen sind Blasen, Schaumkronen oder an der Oberfläche des Mediums treibende Festkörper benannt. Eine dort vorgeschlagene Kalibration dient ausschließlich zur Anpassung der an der Oberfläche gemessenen Längen an die wahren Längenverhältnisse, um geometrischen Verzerrungen auf Grund eines je nach Pegelstand variierenden Abstandes zwischen der Kamera und der Oberfläche Rechnung zu tragen. Unterhalb der Oberfläche auftretende Effekte bleiben unberücksichtigt, insbesondere eine Miteinbeziehung der lokalen Fließgeschwindigkeiten in jedem Punkt des Querschnitts des Kanals während der Kalibration erfolgt nicht.

Die JP 2004 117 119 A offenbart ein Verfahren zum Bestimmen einer Oberflächengeschwindigkeitsverteilung und einer Flussrate von Wasser eines Flusses. Dazu werden mittels Videokameras Fotographien von der Oberfläche des Flusses erzeugt und ein Pegel des Flusses gemessen. Die Fotographien werden gegen Verzerrungen korrigiert. Weiterhin wird ein vorgegebener Korrekturfaktor auf von den Fotographien abgeleitete Daten und andere Randbedingungen der Messstelle angewendet. Eine Miteinbeziehung der lokalen Fließgeschwindigkeiten in jedem Punkt des Querschnitts des Flusses, insbesondere unter dessen Oberfläche, während einer Kalibration erfolgt nicht.

Aufgabe der Erfindung ist es daher, ein Verfahren der eingangs genannten Art anzugeben, welches berührungslos arbeitet und dabei besonders genau und wirtschaftlich ausführbar ist und insbesondere bei sehr geringen oder negativen Oberflächengeschwindigkeiten und Durchflussmengen gut anwendbar ist.

Die Verfahrenserfindung löst diese Aufgabe über optische Messung der Richtungen und der Beträge der Geschwindigkeiten von Objekten im Bereich der Flüssigkeitsoberfläche, Messung des Flüssigkeitsstandes, automatische Bilderkennung der Objekte und Berechnung einer zeitlich und räumlich hoch aufgelösten Objektgeschwindigkeitsverteilung, Berechnung einer repräsentativen Oberflächengeschwindigkeit v₀ der Flüssigkeit aus den Ergebnissen des vorherigen Schrittes, Ermittlung einer von der Flüssigkeit durchströmten Fläche A aus dem Wert des aktuellen Flüssigkeitsstandes und einem hinterlegten Datensatz, Multiplikation der repräsentativen Oberflächengeschwindigkeit v₀ mit der Fläche A und einem Faktor k, wobei dieser Faktor k aus einem hinterlegten Datensatz ermittelt wird, dessen Werte aus einer numerischen oder einer experimentellen Kalibration der Messstelle stammen, wobei bei der experimentellen Kalibration die repräsentative Oberflächengeschwindigkeit v₀ gemäß den Schritten a) bis d) und die Durchflussmenge Q mittels eines unabhängigen Messverfahrens zeitgleich gemessen und bei der numerischen Kalibration v₀ und Q mittels eines unabhängigen Verfahrens berechnet werden und der Faktor k in beiden Fällen gemäß der Formel k = (Q/A)/v₀ berechnet wird. Im Gegensatz zu anderen bekannten Verfahren, wie beispielsweise hydrometrischen Messflügeln oder Ultraschallanlagen, arbeitet das erfindungsgemäße Verfahren mit großem Vorteil berührungslos und aus sicherer Entfernung von der Flüssigkeitsoberfläche, so dass das Ausfallrisiko deutlich vermindert ist. Die für die Durchführung des Verfahrens erforderlichen Vorrichtungen können daher weder durch die Strömung noch durch Inhaltsstoffe oder die chemische Natur der Flüssigkeit noch durch mitgeführte Objekte wie beispielsweise Eis oder Treibgut, beschädigt oder zerstört werden.

Im Gegensatz zu bekannten Radar-Geschwindigkeitsmessungen ist das erfindungsgemäße optische Verfahren sowohl unempfindlich gegen Wellen als auch gegenüber der Oberflächengeschwindigkeit/Durchflussmenge selber. Mit großem Vorteil ist das erfindungsgemäße optische Verfahren für alle praxisrelevanten Geschwindigkeiten geeignet, also gleichermaßen für sehr schnelle und sehr langsame, stehende oder sogar rückwärts fließende Flüssigkeiten, so dass sämtliche Durchflusszustände sicher erfasst werden. Eine radarbasierte Messung hat gerade bei langsam fließenden oder gar stehenden Flüssigkeiten große Probleme, da die Flüssigkeitsoberfläche mit abnehmender Geschwindigkeit zunehmend glatter wird, so dass die Rückstreuung der Signale stark reduziert ist. Hierdurch werden die Radarsignale immer schwächer, bis sie schließlich im stets vorhandenen Rauschen untergehen und nicht mehr zweifelsfrei detektierbar sind. Durch die Verwendung von Objekten im Bereich der Flüssigkeitsoberfläche als Marker für die Oberflächengeschwindigkeit ist das Verfahren mit großem Vorteil unabhängig von Oberflächenrauhigkeiten oder dergleichen. Die automatische Bilderkennung ist erfindungsgemäß nicht auf bekannte spezifische Objekte abgestimmt, sondern kann vielmehr unbekannte Objekte auf oder nahe der Flüssigkeitsoberfläche erkennen und verfolgen und deren räumliche und zeitliche Geschwindigkeitsverteilung und die Durchflussmenge berechnen. Bei bekannter Geometrie der Leitung wird die flüssigkeitsstandsabhängige Fläche A des von der Flüssigkeit durchflossenen Teilquerschnitts in Abhängigkeit vom gemessenen Flüssigkeitsstand bestimmt, wobei auf Daten einer hinterlegten Tabelle zurückgegriffen wird, die die Fläche A bei unterschiedlichen Flüssigkeitsständen enthält oder aus der mittels der hinterlegten Daten auf die Fläche A interpoliert wird. Der gesuchte Durchfluß Q ergibt sich gemäß Q = A·vm durch Multiplikation dieser Fläche A mit der mittleren Fließgeschwindigkeit vₘ des durchflossenen Teilquerschnitts, die aus der repräsentativen Oberflächengeschwindigkeit v₀ gemäß vₘ = k·v₀ berechnet wird. Dabei bezeichnet k das dimensionslose Geschwindigkeitsverhältnis von vₘ zu v₀ zwischen dem Querschnittsmittel vₘ der Geschwindigkeit und der erfindungsgemäß bestimmten repräsentativen Oberflächengeschwindigkeit v₀. Der Faktor k ist leitungsprofil-, flüssigkeitsstands- und teilweise auch geschwindigkeitsabhängig und wird durch Kalibrierung der Durchflussmessstelle bestimmt. Eventuell nicht im hinterlegten Datensatz vorhandene Werte von k zu bestimmten Flüssigkeitsständen werden mittels Interpolation aus den vorhandenen Werten ermittelt. Die Kalibrierung kann alternativ durch Messung oder durch numerische Berechnung erfolgen. Bei der messtechnischen Kalibrierung werden die repräsentativen Oberflächengeschwindigkeiten v₀ erfindungsgemäß und die Durchflüsse Q mit Hilfe eines unabhängigen Messverfahrens zeitgleich gemessen. Aus diesen zeitgleichen Messungen resultieren die dimensionslosen Geschwindigkeitsverhältnisse gemäß k= vₘ/v₀ = (Q/A)/v₀. Zu Vergleichs- und Kalibrationszwecken können die Durchflüsse beispielsweise mittels hydrometrischer oder magnetischinduktiver Messflügel, mittels Wehranlagen oder anderer bekannter Durchflussmessverfahren gemessen werden. Numerische Messstellenkalibrierung ist bekannt und in der DE 43 20 295 A1 beschrieben. Die Faktoren A und k können gemäß A_{red} = A · k zusammengefasst werden, so dass sich die gesuchten Durchflüsse Q entsprechend aus dem Produkt von A_{red} · v₀ ergeben.

In Ausgestaltung der Erfindung ist vorgesehen, dass die Objekte natürlichen oder künstlichen Ursprungs sind. Als natürliche Objekte kommen insbesondere Blütenstaub, Treibgut, Luftblasen oder dergleichen in Betracht. Es ist nicht erforderlich, der Flüssigkeit künstliche Objekte wie Styroporkugeln oder künstlich erzeugte Luftblasen zuzufügen. Die Erzeugung eines Luftblasenvorhangs aus einem leitungsquerenden Druckluftrohr ist schon allein wegen der Installation des Druckluftrohres teuer und die Erzeugung des notwendigen Luftdrucks energieaufwendig. Falls gewünscht, können derartige künstliche Partikel erfindungsgemäß natürlich ebenfalls verwendet werden, da die automatische Bilderkennung selbstverständlich auch diese erkennen und verfolgen kann. Welche Art von Objekten, egal ob natürlich in oder auf der Flüssigkeit vorhanden oder künstlich zugefügt, verwendet werden, betrifft nicht den Kern der Erfindung. Besonders vorteilhaft ist natürlich die Verwendung bereits in der Flüssigkeit vorhandener Objekte wie Blätter, Treibgut, etc.

In Ausgestaltung der Erfindung ist vorgesehen, dass die Erfassung der Objekte mit einer Kamera, vorzugsweise einer CCD- oder einer digitalen Kamera, insbesondere einer mit Objektiven versehenen Kamera, erfolgt, wobei vorzugsweise eine Ausrichtungs- und Brennweitensteuerung erfolgt. Durch die Verwendung einer Kamera als Sensor werden teure Spezialsensoren entbehrlich. Die Positionierung und Ausrichtung der Kamera und die Einstellung ihrer Brennweite erfolgt erfindungsgemäß bedarfsweise manuell oder computergesteuert. Die Computersteuerung dient dazu, den mit Hilfe der Kamera erfassten Flüssigkeitsausschnitt in Abhängigkeit von den Beträgen und Richtungen der erfassten Objektgeschwindigkeiten variieren zu können.

In Ausgestaltung der Erfindung ist daher vorgesehen, dass in einer Sequenz von Bildern der Kamera in wenigstens zwei, vorzugsweise mehr als zwei Bildern, mindestens ein, vorzugsweise mehrere, Objekte identifiziert und ihre Wege durch den von der Kamera erfassten Blickwinkelbereich als Funktion der Zeit verfolgt und daraus die Objektgeschwindigkeiten berechnet werden. Durch die erfindungsgemäße Identifizierung desselben Objektes in verschiedenen Bildern werden der Weg und aufgrund der bekannten Zeitpunkte der aufeinanderfolgenden Aufnahmen auch die zeitabhängigen Absolutbeträge und Richtungen der Objektgeschwindigkeiten bestimmt. Bei geringer Objektgröße entsprechen diese zeitabhängigen Absolutbeträge und Richtungen der Geschwindigkeit des identifizierten Objekts den entlang des erfassten Objektwegs vorherrschenden Mittelwerten der Absolutbeträge und Richtungen der Oberflächengeschwindigkeit der Flüssigkeit. Erfindungsgemäß werden daher nur hinreichend kleine Objekte identifiziert, wobei deren Auswahlgröße relativ zur Leitungsgröße ist. Die identifizierten Objekte werden erfindungsgemäß jeweils in einem ersten Referenzbild an einer ersten Position A und in einem um Δt später aufgenommenen Vergleichsbild an einer zweiten Position B detektiert. Aus dem Weg zwischen A und B und der dafür benötigen Zeitspanne Δt werden Betrag und Richtung der lokalen Oberflächengeschwindigkeit v₀ berechnet und der lokalen Position M der Flüssigkeitsoberfläche zugeordnet, wobei sich M in der Nähe von A und B befindet, beispielsweise das Mittel der identifizierten Positionen A und B ist. Anstelle der Mittelposition kann erfindungsgemäß auch eine andere Wichtung vorgenommen werden, beispielsweise eine Drittel- oder Zehntelposition. Es ist von besonderem Vorteil, wenn mehrere Objekte zur Geschwindigkeitsbestimmung ausgewertet werden. Da die Kamera in der Regel stets viele Objekte im Blickfeld hat, kann die vielfältige Information einfach durch größeren Rechenaufwand des Computers ermittelt werden. Die vielen Einzelwerte der Objektgeschwindigkeiten erlauben eine sehr viel genauere Bestimmung der mittleren Oberflächengeschwindigkeit. Darüber hinaus ermöglicht hierdurch das Verfahren zu ermitteln, welche Oberflächengeschwindigkeit wo gemessen wird, so dass die Oberflächengeschwindigkeit nicht nur punktuell sondern in ihrer räumlichen Verteilung ermittelt wird.

Beispielsweise kann die Genauigkeit dadurch erhöht werden, dass der zu berechnende Wert für die Oberflächengeschwindigkeit durch Mittelwertbildung gegebenenfalls ohne Berücksichtigung besonders untypischer Einzelwerte ermittelt wird. In einem Cluster von Einzelwerten sind besonders untypische Einzelwerte daran zu erkennen, dass sie sehr stark vom Durchschnitt abweichen. In einem solchen Fall liegt die Vermutung einer Fehlmessung nahe, so dass durch außer Acht lassen solcher untypischen Einzelwerte in der Regel der aus den verbleibenden Einzelwerten gebildete Mittelwert genauer ausfällt.

Der Blickwinkelbereich der Kamera kann darüber hinaus auch so genutzt werden, dass der von der Kamera erfasste Oberflächenbereich der Flüssigkeit in Teilbereiche aufgeteilt und die Geschwindigkeiten der Objekte jeweils positionsabhängig diesen Teilbereichen zugeordnet werden. Auf diese Weise erhält man sehr detaillierte ortsabhängige Verteilungen der Oberflächengeschwindigkeit für den gesamten beobachteten Bereich der Flüssigkeitsoberfläche.

Der von der Kamera erfasste Bereich der Flüssigkeitsoberfläche kann je nach Kameraabstand, Blickwinkel und Brennweite die Größenordnungen von etwa 0,1 m bis etwa 100 m überspannen. Ein kleiner Kameraausschnitt erfordert bei schnell fließender Flüssigkeit schnellere Messvorgänge als ein großer Kameraausschnitt bei einer langsam fließenden Flüssigkeit. Aus diesem Grund sieht die Weiterbildung der Erfindung vor, dass in Abhängigkeit des von der Kamera erfassten Bereichs der Flüssigkeitsoberfläche und der ermittelten Oberflächengeschwindigkeiten der zeitliche Abstand zwischen der Erfassung zweier Bilder variierbar ist, vorzugsweise zwischen 0,001 Sekunden und 900 Sekunden, insbesondere zwischen 0,01 Sekunden und 60 Sekunden. Auf diese Weise können die zur Verfügung stehenden Ressourcen der Kamera und des Computers je nach Anforderung optimal genutzt werden. Erfindungsgemäß ist dabei vorgesehen, dass der zeitliche Abstand zweier Bilder sowohl computergesteuert als auch manuell variiert werden kann. In der ersten Ausführungsvariante veranlasst das Bilderkennungsprogramm eine Verlängerung des zeitlichen Abstandes, falls sich Position A und B nicht ausreichend voneinander unterscheiden, beispielsweise identisch oder nahezu identisch sind, oder eine Verkürzung des zeitlichen Abstandes, falls die Unterschiede zu groß sind. In der manuellen Ausführungsform erfolgt die Variation des Zeitabstands durch einen Benutzer.

Die für das Verfahren verwendeten Geräte, insbesondere die Kamera und der gegebenenfalls vor Ort mit der Auswertung befasste Computer, können im Außeneinsatz mit Batterie betrieben werden. In diesem Fall ist eine Ausgestaltung der Erfindung besonders wichtig, nach der eine mit der Objekterfassung, der Geschwindigkeits- und der Durchflussberechnung befasste Aktivphase wiederholt mit einer Ruhephase abwechselt, um den Energieverbrauch der das Verfahren ausführenden Vorrichtung, insbesondere der Kamera und des Computers, zu reduzieren. Ruhe- und Aktivphasendauer sind dabei vom Einsatzgebiet abhängig, bei Gewässern könnte eine Messung alle 15 Minuten ausreichen, aber auch kürzere oder längere Intervalle sind vorstellbar.

In Ausgestaltung der Erfindung ist vorgesehen, dass an einer Messstelle Daten durch mehrere Kameras gewonnen und ausgewertet werden und/oder dass an mehreren Messstellen Daten durch jeweils eine oder mehrere Kameras gewonnen und ausgewertet werden. Mit großem Vorteil ermöglicht die Erfindung die Überwachung über eine gesamte Leitungslänge oder über kritische Längenbereiche derselben, wobei besonders kritische Abschnitte für höchste Genauigkeiten mit mehreren Kameras beobachtet werden können.

Besonders vorteilhaft ist, wenn die ermittelten Daten und/oder die Auswerteergebnisse an Messwertnutzer kommuniziert werden, vorzugsweise über das Internet. Der oder die Messwertnutzer können dabei in jeder beliebigen Entfernung zum Messobjekt stehen, beispielsweise in einer Steuer- oder Notfallzentrale eines Industriebetriebes, einer öffentlichen Einrichtung oder dergleichen. Die Verwendung der Datenübertragung mittels Internet vereinfacht die Anwendung des Verfahrens.

Die Erfindung umfasst neben dem beschriebenen Verfahren auch eine Vorrichtung zur Durchführung des Verfahrens, wobei die Vorrichtung eine über der Ebene der Flüssigkeitsoberfläche angeordnete Kamera, vorzugsweise eine mit einer entsprechenden Vorrichtung schwenk- und steuerbare Kamera, eine Verbindung zu einem Computer, einen Computer, einen Sensor zur Erfassung des Flüssigkeitsstandes in der Leitung und vorzugsweise einen Scheinwerfer, insbesondere Infrarotscheinwerfer, aufweist, wobei der Computer mit einer Software zur automatischen Bilderkennung, zur Berechnung der räumlich und zeitlich hoch aufgelösten Objektgeschwindigkeiten und einer daraus abgeleiteten repräsentativen Oberflächengeschwindigkeit v₀, zur Ermittlung einer von der Flüssigkeit durchströmten Fläche A aus dem Wert des aktuellen Flüssigkeitsstandes und einem hinterlegten Datensatz, zur Multiplikation der repräsentativen Oberflächengeschwindigkeit v₀ mit der Fläche A und einem Faktor k, wobei dieser Faktor k aus einem hinterlegten Datensatz ermittelt wird, dessen Werte aus einer numerischen oder einer experimentellen Kalibration der Messstelle stammen, wobei bei der experimentellen Kalibration die repräsentative Oberflächengeschwindigkeit v₀ gemäß den Schritten a) bis d) und die Durchflussmenge Q mittels eines unabhängigen Messverfahrens zeitgleich gemessen und bei der numerischen Kalibration v₀ und Q mittels eines unabhängigen Verfahrens berechnet werden und der Faktor k in beiden Fällen gemäß der Formel k = (Q/A)/v₀ berechnet wird, und zur Steuerung der Kamera und der Datenübertragung versehen ist. Die gegenüber Vorrichtungen zur Lasermessung von Geschwindigkeiten oder mittels Laserrückstreuung arbeitenden Sensoren erzielbaren Vorteile sind weiter oben im Zusammenhang mit dem Verfahren bereits beschrieben worden. Der Scheinwerfer ermöglicht den Betrieb der Vorrichtung bei Dunkelheit, wobei insbesondere ein Infrarotscheinwerfer vorteilhaft ist, da er Menschen weniger stört. Die eine oder mehrere Kamera(s) können oberhalb der Ebene der Flüssigkeit direkt über der Flüssigkeitsoberfläche oder unmittelbar benachbart oder entfernt seitlich davon angeordnet sein, also außerhalb der eigentlichen Flüssigkeitsoberfläche.

Dadurch, dass an einer Messstelle bei Bedarf mehrere Kameras und/oder Flüssigkeitsstandssensoren vorgesehen sind, wird mit großem Vorteil eine möglichst hohe Genauigkeit des von der erfindungsgemäßen Vorrichtung ermittelten Durchflusswertes erzielt.

Wenn der Blickwinkelbereich der Kamera auf einen im wesentlichen verwirbelungsfreien Oberflächenbereich der Flüssigkeit gerichtet ist, insbesondere auf einen stromaufwärts oder -abwärts einer Brücke oder dergleichen gelegenen Oberflächenbereich, wird mit großem Vorteil eine besonders hohe Genauigkeit der Oberflächengeschwindigkeits- und Durchflussbestimmung erreicht.

Ist die Kamera mit einem auf den zu erfassenden Oberflächenbereich abgestimmten Objektiv geeigneter fester oder veränderlicher Brennweite versehen, kann vorteilhafterweise der von der Kamera erfasste Bildausschnitt entweder manuell oder computergesteuert verändert werden, so dass die Vorrichtung an unterschiedliche Strömungszustände der Flüssigkeit anpassbar ist. Mit großem Vorteil ist die Vorrichtung also flexibel an die momentan an der Messstelle herrschenden Flüssigkeitsstände und Objektgeschwindigkeiten anpassbar, so dass eine sehr hohe Genauigkeit des von der erfindungsgemäßen Vorrichtung ermittelten Durchflusswertes erzielt wird.

In Ausgestaltung der Erfindung ist vorgesehen, dass die Kamera an einem um mindestens eine Achse rotierbaren Schwenk-/Neigekopf angeordnet ist. Hierdurch wird mit großem Vorteil die Ausrichtung der Blickrichtung der Kamera manuell oder computergesteuert so verändert, dass ein vergrößerter oder verkleinerter Bereich der Flüssigkeitsoberfläche erfasst und so ein möglichst genauer Durchflusswert ermittelt werden kann.

Ein Ausführungsbeispiel der Erfindung wird nachfolgend anhand der Zeichnung näher erläutert. Die einzige Figur zeigt im Einzelnen:

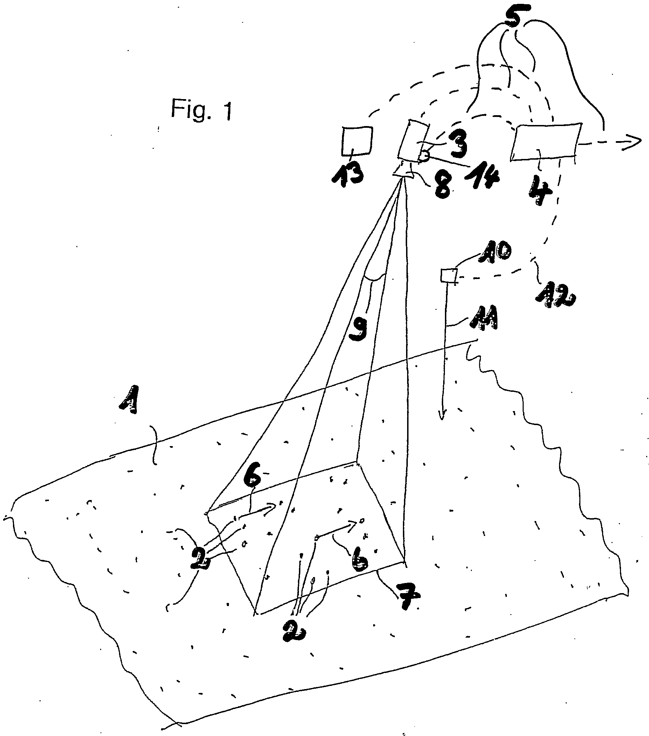

Fig. 1: eine schematische Darstellung einer Vorrichtung zur Durchführung des erfindungsgemäßen Verfahrens.

In der Figur 1 erkennt man eine Flüssigkeitsoberfläche 1, mit Objekten 2. In diesem Beispiel ist die Flüssigkeit das Wasser eines Baches, Flusses oder Kanals und die Objekte sind kleine Driftkörper wie beispielsweise Staubkörner. In der Darstellung sind lediglich einige Objekte 2 beispielhaft mit Bezugszeichen versehen. Eine Kamera 3 ist in unmittelbarer Nachbarschaft zum Gewässer oberhalb der Ebene der Wasseroberfläche 1 an einem Pfahl, einer Brücke, einem Pegelhaus oder dergleichen angeordnet. Die Kamera 3 ist erfindungsgemäß demnach direkt oberhalb der Oberfläche oder seitlich beabstandet dazu angeordnet. Die Kamera 3 ist über eine Verbindung 5 mit einem Computer 4 verbunden. Die Verbindung 5 kann ein Kabel, eine Funkverbindung oder eine andere, geeignete Datenübertragungsform sein. Der Computer 4 ist erfindungsgemäß entweder benachbart zur Kamera ortsfern zu dieser angeordnet, beispielsweise in einem Pegelhaus oder in einem Steuer- oder Leitstand einer Rechenzentrale, die eine ganze Reihe von erfindungsgemäßen Vorrichtungen entlang des Gewässers betreut. Der Computer 4 ist mit einer Software zur automatischen Bilderkennung und zur Berechnung der in der Zeichnung durch einen Pfeil 6 angedeuteten Objektgeschwindigkeit ausgestattet. Erfindungsgemäß wird einem in der Nähe der Gewässeroberfläche identifiziertem Objekt, wie beispielsweise einem Staubkorn, eine lokale Position (x, y) auf der Gewässeroberfläche zugeordnet, für die der Absolutbetrag und die Richtung der hier momentan herrschenden Oberflächengeschwindigkeit v₀(x,y) des Gewässers anhand der beiden Kamerabilder bestimmt werden.

Erfindungsgemäß wird dieses Staubkorn 2 jedoch nicht nur in zwei unmittelbar aufeinanderfolgenden Kamerabildern sondern in der Regel in einer Sequenz mehrerer Bilder mehrfach erfasst. Außerdem werden in einem Bild erfindungsgemäß regelmäßig eine große Anzahl verschiedener und eindeutig unterscheidbarer Objekte identifiziert, also beispielsweise fünf Staubkörner, ein Blatt, vier Luftblasen, etc., die sich innerhalb eines durch einen Rahmen 7 angedeuteten Blickwinkelbereichs der Kamera 3 befinden. Jedem der identifizierten Objekte wird mindestens eine, in der Regel mehrere lokale Positionen (x, y) auf der Gewässeroberfläche zugeordnet. Für diese werden jeweils die Absolutbeträge und die Richtungen der hier momentan vorherrschenden Oberflächengeschwindigkeiten v₀(x,y) des Gewässers bestimmt.

In berührungsloser Weise und in sehr kurzer Zeit werden erfindungsgemäß für sehr viele einzelne Positionen (x, y) des mit Hilfe der Kamera 3 erfassten Blickwinkelbereichs des Gewässers die jeweils vorherrschenden Oberflächengeschwindigkeiten v₀(x,y) ermittelt. Insbesondere bei tiedebeeinflussten Gewässern ist die Vorrichtung in der Lage, mittels des erfindungsgemäßen Verfahrens zuverlässig Durchflussmengen zu bestimmen, selbst bei sehr geringen, keinen oder negativen Oberflächengeschwindigkeiten. Die Kamera 3 kann beispielsweise auf einer Brücke angebracht sein. In diesem Fall kann die Kamera 3 senkrecht nach unten oder geneigt ausgerichtet sein. Nicht dargestellt ist eine Befestigung der Vorrichtung auf einem Ausleger, einem Mast, einem Pfahl am Ufer oder dergleichen. Nicht dargestellt ist ebenfalls die optionale Verwendung mehrerer Kameras und /oder die gezielte computergesteuerte Veränderung der Kameraausrichtungen und/oder Objektivbrennweiten. Dargestellt ist weiterhin ein Scheinwerfer 13, der bei Dunkelheit die Funktionsfähigkeit der Vorrichtung gewährleistet und vorzugsweise ein Infrarotscheinwerfer ist. Der Scheinwerfer 13 leuchtet den erfassten Bildbereich 7 so aus, dass auch bei geringer Helligkeit oder völliger Dunkelheit die momentanen Oberflächengeschwindigkeiten in der erläuterten Weise erfasst werden.

Der Flüssigkeitsstand, d. h. die Höhe der Wasseroberfläche 1 über einem festen Niveau wird durch einen Flüssigkeitsstandssensor 10 ermittelt, der mittels eines nicht gezeigten Halters oder Gestells an der Brücke oder einer sonstigen ortsfesten Position befestigt ist. Vom Flüssigkeitssensor 10 geht ein Signal 11 zur Wasseroberfläche 1 aus, wobei das Signal beispielsweise ein Ultraschall- oder ein Radarsignal sein kann, welches von der Wasseroberfläche 1 reflektiert und vom Flüssigkeitssensor 10 registriert wird, um den Abstand zwischen dem Flüssigkeitssensor 10 und der Wasseroberfläche 1 zu bestimmen. Der Flüssigkeitssensor 10 ist über eine Verbindung 12 ebenfalls mit dem Computer 4 verbunden. Er kann auch nach jedem anderen bekannten Verfahren arbeiten. Hierzu können z.B. Drucksonden, Einperlsonden, Schwimmer, Winkelcodierer oder andere bekannte Flüssigkeitsstandssensoren eingesetzt werden.

Insbesondere bei Batteriebetrieb kann die Apparatur zur Einsparung von elektrischer Energie nach Ermittlung von Oberflächengeschwindigkeiten für eine gewisse Zeit vorübergehend in einen Ruhezustand versetzt werden. Dies ist deshalb möglich, weil sich die Fließgeschwindigkeit des Gewässers in der Regel nicht kurzfristig ändert. So genügt es in der Praxis häufig, wenn jede Viertelstunde eine Messsequenz durchgeführt wird. Diese dauert typischerweise nur einige Sekunden, so dass sich an eine einige Sekunden dauernde Aktivphase eine ca. 14 bis 15 minütige Ruhephase anschließt. Hierdurch wird die Batterielaufzeit vervielfacht, im vorliegenden Beispiel auf mindestens das 15-fache. Selbstverständlich kann auch eine fünf- oder mehrminütige Messung von einer entsprechend reduzierten oder verlängerten Ruhephase gefolgt werden. Bei anderen Anwendungen, bei denen sich die Fließgeschwindigkeit der Flüssigkeit schnell ändert, sind gänzlich andere Ruhe- und Aktivphasendauern erforderlich, die von der erfindungsgemäßen Vorrichtung ohne Weiteres umgesetzt werden können. Solche Anwendungen könnten beispielsweise Rohrleitungen sein, die chargenweise Flüssigkeiten transportieren.

### BEZUGSZEICHENLISTE

- 1: Flüssigkeitsoberfläche
- 2: Objekt
- 3: Kamera
- 4: Computer
- 5: Verbindung
- 6: Geschwindigkeit
- 7: Blickwinkelbereich
- 8: Objektiv
- 9: Blickwinkel
- 10: Flüssigkeitsstandssensor
- 11: Signal
- 12: Verbindung
- 13: Scheinwerfer
- 14: Schwenk-/Neigekopf

## Patentansprüche

1. Verfahren zur Bestimmung der Oberflächengeschwindigkeiten und der Durchflussmenge von Flüssigkeiten in Rohrleitungen, offenen oder geschlossenen Kanälen und Gewässern umfassend die Schritte:
a) optische Messung der Richtungen und der Beträge der Geschwindigkeiten (6) von Objekten (2) im Bereich der Flüssigkeitsoberfläche (1),
b) Messung des Flüssigkeitsstandes,
c) automatische Bilderkennung der Objekte (2) und Berechnung einer zeitlich und räumlich hoch aufgelösten Objektgeschwindigkeitsverteilung,
d) Berechnung einer repräsentativen Oberflächengeschwindigkeit v₀ der Flüssigkeit aus den Ergebnissen des Schrittes c),
e) Ermittlung einer von der Flüssigkeit durchströmten Fläche A aus dem Wert des aktuellen Flüssigkeitsstandes und einem hinterlegten Datensatz,
f) Multiplikation der repräsentativen Oberflächengeschwindigkeit v₀ mit der Fläche A und einem Faktor k, wobei dieser Faktor k aus einem hinterlegten Datensatz ermittelt wird, dessen Werte aus einer numerischen oder einer experimentellen Kalibration der Messstelle stammen, **dadurch gekennzeichnet dass** bei der experimentellen Kalibration die repräsentative Oberflächengeschwindigkeit v₀ gemäß den Schritten a) bis d) und die Durchflussmenge Q mittels eines unabhängigen Messverfahrens zeitgleich gemessen und bei der numerischen Kalibration die repräsentative Oberflächengeschwindigkeit v₀ und die Durchflussmenge Q mittels eines unabhängigen Verfahrens berechnet werden und der Faktor k in beiden Fällen gemäß der Formel k = (Q/A)/v₀ berechnet wird.

2. Verfahren gemäß Anspruch 1, bei dem die Objekte (2) natürlichen oder künstlichen Ursprungs sind.

3. Verfahren nach Anspruch 1 oder 2, bei dem die Erfassung der Objekte (2) mit einer Kamera (3), vorzugsweise einer CCD oder einer digitalen Kamera (3), insbesondere einer mit Objektiv (8) versehenen Kamera (3), erfolgt, wobei vorzugsweise eine Ausrichtungs- und Brennweitensteuerung erfolgt.

4. Verfahren nach Anspruch 1, 2 oder 3, bei dem in einer Sequenz von Bildern der Kamera (3) in wenigstens zwei, vorzugsweise mehr als zwei Bildern, mindestens ein Objekt (2), vorzugsweise mehrere Objekte (2), identifiziert und ihr Weg durch den von der Kamera (3) erfassten Blickwinkelbereich (7) als Funktion der Zeit verfolgt und daraus die Objektgeschwindigkeit (6) nach Betrag und Richtung berechnet wird.

5. Verfahren nach einem der Ansprüche 1 bis 4, bei dem der zu berechnende Wert für die Flüssigkeitsgeschwindigkeit (6) durch Mittelwertbildung gegebenenfalls ohne Berücksichtigung besonders untypischer Einzelwerte ermittelt wird.

6. Verfahren nach einem der Ansprüche 1 bis 5, bei dem der von der Kamera (3) erfasste Oberflächenbereich (7) der Flüssigkeit (1) in Teilbereiche aufgeteilt und die Geschwindigkeiten (6) der Objekte (2) jeweils positionsabhängig diesen Teilbereichen zugeordnet werden, so dass für den erfassten Oberflächenbereich (7) die Oberflächengeschwindigkeitsverteilung in hoher zeitlicher und räumlicher Auflösung mit hoher Genauigkeit bestimmt wird.

7. Verfahren nach einem der vorhergehenden Ansprüche, bei dem in Abhängigkeit des von der Kamera (3) erfassten Bereichs (7) der Flüssigkeitsoberfläche (1) und in Abhängigkeit von den ermittelten Oberflächengeschwindigkeiten der zeitliche Abstand zwischen der Erfassung zweier Bilder variiert wird, vorzugsweise zwischen 0,001 Sekunden und 900 Sekunden, insbesondere zwischen 0,01 und 60 Sekunden.

8. Verfahren nach einem der vorhergehenden Ansprüche, bei dem eine mit der Objekterfassung, Objektgeschwindigkeitsverteilungsermittlung und
Durchflussberechnung befasste Aktivphase wiederholt mit einer Ruhephase abwechselt, um den Energieverbrauch der das Verfahren ausführenden Vorrichtung, insbesondere Kamera (3) und/oder Computer (4), zu reduzieren.

9. Verfahren gemäß einem der Ansprüche 1 bis 8, bei dem an einer Messstelle Daten durch mehrere Kameras (3) gewonnen und ausgewertet werden und/oder bei dem an mehreren Messstellen Daten durch jeweils eine oder mehrere Kameras (3) gewonnen und ausgewertet werden.

10. Verfahren gemäß einem der Ansprüche 1 bis 9, bei dem die ermittelten Daten und/oder die Auswerteergebnisse an Messwertnutzer kommuniziert werden, vorzugsweise über das Internet.

11. Vorrichtung zur Durchführung des Verfahrens nach einem der vorhergehenden Ansprüche, **dadurch gekennzeichnet, dass** sie wenigstens eine, über der Flüssigkeitsoberfläche angeordnete Kamera (3), vorzugsweise mittels einer entsprechenden Vorrichtung schwenk- und steuerbare Kamera, eine Verbindung (5) zu einem Computer (4), einen Computer (4), einen Sensor (10) zur Erfassung des Flüssigkeitsstandes und vorzugsweise einen Scheinwerfer (13), insbesondere Infrarotscheinwerfer, aufweist, wobei der Computer (4) mit einer Software zur automatischen Bilderkennung, zur Berechnung der räumlich und zeitlich hoch aufgelösten Objektgeschwindigkeiten und einer daraus abgeleiteten repräsentativen Oberflächengeschwindigkeit v₀, zur Ermittlung einer von der Flüssigkeit durchströmten Fläche A, zur Multiplikation der repräsentativen Oberflächengeschwindigkeit v₀ mit der Fläche A und einem Faktor k, wobei dieser Faktor k aus einem hinterlegten Datensatz ermittelt wird, dessen Werte aus einer numerischen oder einer experimentellen Kalibration der Messstelle stammen und zur Steuerung der Kamera (3) und der Datenübertragung versehen ist, **dadurch gekennzeichnet dass** bei der experimentellen Kalibration die repräsentative Oberflächengeschwindigkeit v₀ gemäß den Schritten a) bis d) und die Durchflussmenge Q mittels eines unabhängigen Messverfahrens zeitgleich gemessen und bei der numerischen Kalibration die repräsentative Oberflächengeschwindigkeit v₀ und die Durchflussmenge Q mittels eines unabhängigen Verfahrens berechnet werden und der Faktor k in beiden Fällen gemäß der Formel k = (Q/A)/v₀ berechnet wird.

12. Vorrichtung nach Anspruch 11, **dadurch gekennzeichnet, dass** sie mehrere Kameras (3) und/oder Flüssigkeitsstandssensoren (10) aufweist.

13. Vorrichtung nach Anspruch 11 oder 12, **dadurch gekennzeichnet, dass** der Blickwinkelbereich (7) der Kamera (3) auf einen Oberflächenbereich der Flüssigkeit gerichtet ist, der im wesentlichen gleichmäßig durchströmt wird, insbesondere auf einen stromaufwärts oder stromabwärts einer Brücke oder dergleichen gelegenen Oberflächenbereich, wobei der Blickwinkelbereich (7) der einen oder mehreren Kameras (3) vorzugsweise veränderbar ist.

14. Vorrichtung nach einem der Ansprüche 11 bis 13, **dadurch gekennzeichnet, dass** die Kamera (3) mit einem auf den zu erfassenden Oberflächenbereich (7) abgestimmten Objektiv (8) geeigneter fester oder veränderlicher Brennweite versehen ist.

15. Vorrichtung gemäß einem der Ansprüche 11 bis 14, **dadurch gekennzeichnet, dass** die Kamera (3) an einem um mindestens eine Achse rotierbaren Schwenk-/Neigekopf angeordnet ist.

## Claims

1. A method for determining the surface speeds and the flow rate of liquids in pipelines, open or closed channels and stretches of water, comprising the steps:
a) optical measurement of the directions and the values of the speeds (6) of objects (2) in the region of the liquid surface (1),
b) measurement of the liquid level,
c) automatic image recognition of the objects (2) and calculation of an object speed distribution with a high temporal and spatial resolution,
d) calculation of a representative surface speed v₀ of the liquid from the results of step c),
e) determination of area A through which the liquid flows from the value of the current liquid level and a stored dataset,
f) multiplication of representative surface speed v₀ by area A and a factor k, wherein this factor k is ascertained from a stored dataset, the values whereof originate from a numeric or an experimental calibration of the measurement point, **characterised in that**,
in the experimental calibration, representative surface speed v₀ according to steps a) to d) and flow rate Q are measured simultaneously by means of an independent measuring procedure and, in the numeric calibration, representative surface speed v₀ and flow rate Q are calculated by means of an independent method and factor k is calculated in both cases according to the formula k = (Q/A)/v₀.

2. The method according to claim 1, wherein the objects (2) are of natural or artificial origin.

3. The method according to claim 1 or 2, wherein the detection of the objects (2) takes place with a camera (3), preferably a CCD or a digital camera (3), in particular a camera (3) provided with an objective lens (8), wherein an alignment control and focal length control preferably takes place.

4. The method according to claim 1, 2 or 3, wherein in a sequence of images of the camera (3), in at least two, preferably more than two images, at least one object (2), preferably a plurality of objects (2), is identified and its path through the viewing angle range (7) covered by the camera (3) is followed as a function of time and the object speed (6) is calculated therefrom according to value and direction.

5. The method according to any one of claims 1 to 4, wherein the value to be calculated for the liquid speed (6) is ascertained by taking the mean value, if need be discounting particularly non-typical individual values.

6. The method according to any one of claims 1 to 5, wherein the surface region (7) of the liquid (1) covered by the camera (3) is split up into subregions and the speeds (6) of the objects (2) are assigned to these subregions in each case dependent on position, so that the surface speed distribution for the covered surface region (7) is determined in high temporal and spatial resolution with a high degree of accuracy.

7. The method according to any one of the preceding claims, wherein, depending on the region (7) of the liquid surface (1) covered by the camera (3) and depending on the ascertained surface speeds, the time interval between the detection of two images is varied, preferably between 0.001 seconds and 900 seconds, in particular between 0.01 and 60 seconds.

8. The method according to any one of the preceding claims, wherein an active phase involving the object detection, ascertainment of the object speed distribution and the flow rate calculation repeatedly alternates with a rest phase, in order to reduce the energy consumption of the device performing the method, in particular camera (3) and/or computer (4).

9. The method according to any one of claims 1 to 8, wherein data are acquired by a plurality of cameras (3) and evaluated at one measurement point and/or wherein data are acquired by one or more cameras (3) and evaluated at a plurality of measurement points.

10. The method according to any one of claims 1 to 9, wherein the ascertained data and/or the evaluation results are communicated to measurement value users, preferably via the Internet.

11. A device for performing the method according to any one of the preceding claims, **characterised in that** it comprises at least one camera (3) disposed above the surface of the liquid, preferably a camera that can be swivelled and controlled by means of a suitable device, a connection (5) to a computer (4), a computer (4), a sensor (10) for detecting the liquid level and preferably a lamp (13), in particular an infrared lamp, wherein the computer (4) is provided with software for automatic image recognition, for calculating the surface speeds with a high spatial and temporal resolution and a representative surface speed v₀ derived therefrom, for ascertaining an area A through which the liquid flows, for multiplying representative surface speed v₀ by area A and a factor k, wherein this factor k is ascertained from a stored dataset, the values whereof originate from a numeric or an experimental calibration of the measurement point, and for controlling the camera (3) and the data transmission, **characterised in that**, in the experimental calibration, representative surface speed v₀ according to steps a) to d) and flow rate Q are measured simultaneously by means of an independent measuring procedure and, in the numeric calibration, representative surface speed v₀ and flow rate Q are calculated by means of an independent method and factor k is calculated in both cases according to the formula k = (Q/A)/v₀.

12. The device according to claim 11, **characterised in that** it comprises a plurality of cameras (3) and/or liquid level sensors (10).

13. The device according to claim 11 or 12, **characterised in that** the viewing angle range (7) of the camera (3) is directed onto a surface region of the liquid through which a flow takes place essentially uniformly, in particular onto a surface region located upstream or downstream of a bridge or suchlike, wherein the viewing angle range (7) of the one or more cameras (3) is preferably variable.

14. The device according to any one of claims 11 to 13, **characterised in that** the camera (3) is provided with an objective lens (8) of suitable fixed or variable focal length, said objective lens being matched to the surface region (7) to be covered.

15. The device according to at any one of claims 11 to 14, **characterised in that** the camera (3) is disposed on a swivel/tilt head rotatable about at least one axis.

## Revendications

1. Procédé de détermination des vitesses superficielles et de la quantité de débit de liquides dans des conduites, des canaux ouverts ou fermés et d'eaux, comprenant les étapes suivantes :
a) mesure optique des directions et des montants des vitesses (6) des objets (2) dans la zone de la surface du liquide (1),
b) mesure de l'état du liquide,
c) analyse d'image automatique des objets (2) et calcul d'une répartition de vitesse des objets à haute résolution dans le temps et dans l'espace,
d) calcul d'une vitesse superficielle représentative v₀ du liquide à partir de résultats de l'étape c),
e) détermination d'une surface A traversée par le liquide à partir de la valeur de l'état du liquide réel et d'un ensemble mémorisé de données,
f) multiplication de la vitesse superficielle représentative v₀ avec la surface A et un facteur k, ce facteur k étant déterminé à partir d'un ensemble mémorisé de données, dont les valeurs proviennent d'un étalonnage numérique ou expérimental du point de mesure, **caractérisé en ce que** lors de l'étalonnage expérimental, la vitesse superficielle représentative v₀ selon les étapes a) à d) et la quantité de débit Q sont mesurées simultanément au moyen d'un procédé de mesure indépendant et lors de l'étalonnage numérique, la vitesse superficielle représentative v₀ et la quantité de débit Q sont calculées au moyen d'un procédé indépendant et le facteur k est calculé dans les deux cas selon la formule k = (Q/A)/v₀.

2. Procédé selon la revendication 1, pour lequel les objets (2) sont d'origine naturelle ou artificielle.

3. Procédé selon la revendication 1 ou 2, pour lequel la saisie des objets (2) a lieu avec une caméra (3), de préférence une caméra à dispositif à transfert de charge (DTC) ou numérique (3), en particulier une caméra (3) dotée d'un objectif (8), une commande d'orientation et de la distance focale ayant lieu de préférence.

4. Procédé selon la revendication 1, 2 ou 3, pour lequel dans une séquence d'images de la caméra (3) dans au moins deux, de préférence plus de deux images, au moins un objet (2), de préférence plusieurs objets (2), sont identifiés et leur chemin à travers la zone de visée angulaire (7) saisie par la caméra (3) est suivi en tant que fonction de temps et la vitesse de l'objet (6) est calculée d'après cela selon le montant et la direction.

5. Procédé selon l'une quelconque des revendications 1 à 4, pour lequel la valeur à calculer pour la vitesse du liquide (6) est déterminée par l'établissement de moyennes le cas échéant sans tenir compte en particulier de valeurs individuelles atypiques.

6. Procédé selon l'une quelconque des revendications 1 à 5, pour lequel la zone superficielle (7) de liquide (1), saisie par la caméra (3), est divisée en zones partielles et les vitesses (6) des objets (2) sont respectivement affectées en fonction de la position à ces zones partielles de manière que pour la zone superficielle (7) saisie, la répartition de la vitesse superficielle est déterminée avec une haute précision dans une définition temporelle et spatiale élevée.

7. Procédé selon l'une quelconque des revendications précédentes, pour lequel l'intervalle de temps entre la saisie de deux images est modifié en fonction de la zone (7) de surface du liquide (1), saisie par la caméra (3), et en fonction des vitesses superficielles déterminées, de préférence entre 0,001 seconde et 900 secondes, en particulier entre 0,01 et 60 secondes.

8. Procédé selon l'une quelconque des revendications précédentes, pour lequel une phase active se répétant ayant trait à la saisie d'objets, la détermination de la répartition de vitesse d'objets et le calcul de débit alterne avec une phase de repos pour réduire la consommation d'énergie du dispositif exécutant le procédé, en particulier une caméra (3) et/ou un ordinateur (4).

9. Procédé selon l'une quelconque des revendications 1 à 8, pour lequel des données sont acquises et évaluées sur un point de mesure par plusieurs caméras (3) et/ou pour lequel des données sont acquises et évaluées sur plusieurs points de mesure par respectivement une ou plusieurs caméras (3).

10. Procédé selon l'une quelconque des revendications 1 à 9, pour lequel les données déterminées et/ou les résultats d'évaluation sont communiqués à des utilisateurs des valeurs de mesure, de préférence par Internet.

11. Dispositif pour l'exécution du procédé selon l'une quelconque des revendications précédentes, **caractérisé en ce qu'**il comporte au moins une caméra (3) disposée au-dessus de la surface du liquide, de préférence au moyen d'un dispositif correspondant, une caméra pivotante et pilotable, une liaison (5) pour un ordinateur (4), un ordinateur (4), un capteur (10) pour saisir l'état du liquide et de préférence un projecteur (13), en particulier un projecteur à infrarouge, l'ordinateur (4) étant doté d'un logiciel pour l'analyse d'image automatique, pour le calcul des vitesses d'objets à haute résolution dans l'espace et dans le temps et d'une vitesse superficielle v₀ représentative dérivée de celui-ci, pour déterminer une surface A traversée par le liquide, pour la multiplication de la vitesse superficielle v₀ représentative avec la surface A et un facteur k, le facteur k étant déterminé à partir d'un ensemble mémorisé de données, dont les valeurs proviennent d'un étalonnage numérique ou expérimental du point de mesure et pour la commande de la caméra (3) et la transmission des données, **caractérisé en ce que** lors de l'étalonnage expérimental, la vitesse superficielle v₀ représentative selon les étapes a) à d) et la quantité de débit Q sont mesurées simultanément au moyen d'un procédé de mesure indépendant et lors de l'étalonnage numérique, la vitesse superficielle représentative v₀ et la quantité de débit Q sont calculées au moyen d'un procédé indépendant et le facteur k est calculé dans les deux cas selon la formule k = (Q/A)/v₀.

12. Dispositif selon la revendication 11, **caractérisé en ce qu'**il comporte plusieurs caméras (3) et/ou capteurs d'état du liquide (10).

13. Dispositif selon la revendication 11 ou 12, **caractérisé en ce que** la zone d'angle de visée (7) de la caméra (3) est dirigée sur une zone superficielle du liquide, qui est traversée pour l'essentiel de manière régulière, en particulier sur une zone superficielle en amont ou en aval d'un pont ou placée comme tel, la zone d'angle de visée (7) d'une ou plusieurs caméras (3) pouvant être de préférence modifiée.

14. Dispositif selon la revendication 11 à 13, **caractérisé en ce que** la caméra (3) est dotée d'un objectif (8) réglé sur la zone superficielle (7) à saisir, d'une distance focale appropriée fixe ou variable.

15. Dispositif selon la revendication 11 à 14, **caractérisé en ce que** la caméra (3) est disposée sur une tête pivotante/inclinable pouvant tourner au moins autour d'un axe.
